# EUROPÄISCHE PATENTSCHRIFT

(11) **EP 3 724 710 B1**
(45) Veröffentlichungstag und Bekanntmachung des Hinweises auf die Patenterteilung: **01.10.2025**
(21) Anmeldenummer: 18836342.8
(22) Anmeldetag: 13.12.2018
(51) Int. Cl.: G02B 23/24, G02B 23/26

(54) **PROCESS-SCOPE**
PROCESS SCOPE
LUNETTE DE PROCÉDÉ

(30) Priorität: 15.12.2017 CH 15372017
(43) Veröffentlichungstag der Anmeldung: 21.10.2020
(73) Patentinhaber: MSE MEILI AG, 8200 Schaffhausen (CH)
(72) Erfinder: MEILI, Reto T., 8200 Schaffhausen (CH)
(74) Vertreter: Hepp Wenger Ryffel AG
(86) Internationale Anmeldenummer: PCT/CH2018/000051
(87) Internationale Veröffentlichungsnummer: WO 2019/113716

(56) Entgegenhaltungen:
- EP-A1- 1 621 813
- DE-A1- 102015 015 993
- DE-A1- 19 828 688
- FR-A1- 2 316 564
- US-A1- 2008 228 036
- US-A1- 2008 242 927
- US-B1- 6 227 842
- US-B2- 8 194 380
- US-B2- 9 258 535

## Beschreibung

Die vorliegende Erfindung betrifft eine Vorrichtung für die Beobachtung, Überwachung, Steuerung und Regelung von Prozess-Abläufen im Innern von explosionsgeschützten Reaktionsbehältern, gemäss Oberbegriff des Anspruchs 1 sowie deren Verwendung für die in-line oder in-situ Beobachtung, Überwachung, Steuerung und Regelung solcher Prozessabläufe.

Vorrichtungen für die Überwachung von Produktions- und/oder Entwicklungs- und Forschungsprozessen finden ihre Verwendung insbesondere in Laboranlagen und/oder in grosstechnischen Produktionsanlagen bspw. der Petrochemie, der chemischen Industrie, Pharma- und/oder Lebensmittelindustrie, wie sie bspw. aus der US-4'965'601 bekannt sind. Dafür werden die Reaktorbehälter mit Sichtfenstern ausgerüstet, welche eine direkte optische Beobachtung des Materialflusses, insbesondere des Reaktionsfortschrittes, resp. des Verhaltens und des Zustandes des Reaktionsmaterials erlauben. Es versteht sich, dass diese Beobachtungsvorrichtungen und deren Linsensysteme extremen physikalischen und chemischen Belastungen ausgesetzt sind und deshalb besonders robust gebaut sein müssen. Leider erfordern diese Vorrichtungen relativ grosse, in den jeweiligen Behältern eingebaute Beobachtungsfenster, welche jedoch bei extremen Belastungen in unerwünschter Weise verschleissen, korrodieren, undicht werden oder sogar bersten, d.h. damit die Verfügbarkeit der Anlagen beeinträchtigen.

Es werden deshalb vermehrt endoskopische, resp. videoskopische Vorrichtungen, wie sie bspw. aus der EP-0'996'865 bekannt sind, mit relativ kleinen Beobachtungsfenstern verwendet. Auch diese endoskopischen Vorrichtungen eignen sich lediglich für die direkte Prozessbeobachtung durch eine Fachperson, d.h. erlauben keine elektronische Bildauswertung zur Prozesssteuerung.

Eine bewährte Vorrichtung für die Auswertung von beobachteten Prozessdaten ist bspw. aus der US-6'570'647 bekannt und umfasst mindestens eine elektro-optische Messsonde mit einem am Reaktor befestigbaren optischen Sensorkopf, einem Lichtwellenleiter, einem opto-elektronischen Sensor, dessen elektrische Signale einer computergesteuerten Auswerteeinheit zugeführt werden. Diese Vorrichtung erlaubt unterschiedliche Messungen simultan auszuführen und kann für die off- oder online Analyse eingesetzt werden.

Es sind auch endoskopische, resp. videoskopische Vorrichtungen, wie bspw. in der DE-198'28'688 beschrieben, bekannt, mit welchen die Prozesse im Inneren der Prozessreaktoren in Intervallen oder kontinuierlich in Echtzeit überwacht und gesteuert werden können. Diese Vorrichtungen weisen ein elektro-optisches Endoskop und hilfsweise weitere nicht-optische Sensoren auf, deren Signale einer Auswerte- und Steuereinrichtung zugeführt werden. Diese endoskopischen, resp. videoskopischen Vorrichtungen sollen im Folgenden auch "Process-Scope" genannt werden.

Eine weitere endoskopische Vorrichtung zur Überwachung explosionsgefährdeter Bereiche mit Licht- bzw. Bildübertragung mittels Lichtleitern ist in der US 8 194 380 offenbart.

Es versteht sich für den Fachmann, dass diese bekannten Process-Scopes nicht unmittelbar geeignet sind, um in explosionsgefährdeten Umgebungen eingesetzt zu werden. Für derartige Umgebungen bestehen ausführliche Explosionsschutzbestimmungen, wie im Folgenden weiter ausgeführt werden soll.

Explosionsschutz ist ein Bereich der Sicherheitstechnik und dient der Verhütung von Schäden durch technische oder chemische Produkte, Anlagen und andere Einrichtungen an Personen und Sachen. Dabei geht es im Wesentlichen darum die Entstehung von Explosionen, wie sie durch die Entzündung an heissen Oberflächen (bspw. von erhitzten Elektronikkomponenten), an Funken (bspw. aus elektrostatischer Entladung), an kurzwelliger Strahlung und intensivem Licht (bspw. aus der Energieabsorption derselben) oder anderen Zündquellen ausgelöst werden und zum Bersten oder Platzen von Druckbehältern durch unzulässige Druckwellen führen, zu vermeiden.

Ein wirksamer Explosions-Schutz, im Folgenden auch Ex-Schutz genannt, ist in unterschiedlichsten Industriebereichen gesetzlich vorgeschrieben, bspw. im Bergbau (Schlagwetterexplosion, Grubengas- oder Kohlenstaubentzündungen), in Kraftwerken (Dampfkessel), in der chemischen Industrie (chemische Reaktoren), in der Petrochemie, d.h. in der Öl- und Gasindustrie (Pipelines, Tanklager, Gaskessel), aber auch in der verarbeitenden Industrie (Mehlstaubexplosionen in Mühlen oder Getreidelagern) oder in der holzverarbeitenden Industrie.

Es bestehen deshalb für den Ex-Schutz verschiedene Vorschriften, Normen (bspw. IEC oder EN) und gesetzliche Bestimmungen, wie bspw. die ATEX-Richtlinien der Europäischen Union oder der National Electrical Code (NEC) in USA. Insbesondere werden explosionsgefährdete Anlagen entsprechend ihrem Gefahrenpotenzial in allgemein anerkannte Zonen, wie folgt unterteilt:
Zone 0/20: Bereich mit der höchsten Gefahrenstufe (d.h. mit Erwärmungen oberhalb des Flammpunktes);
Zone 1/21: Bereich mit hoher Gefahrenstufe (d.h. mit möglichen Erwärmungen oberhalb des Flammpunktes, wobei durch geeignete Überwachungseinrichtungen die Wahrscheinlichkeit einer Explosion vermindert ist);
Zone 2/22: Bereich mit geringer Explosionswahrscheinlichkeit;
Zone NH: Bereich ohne besondere Explosionsgefahr (non-hazardous).

Diesen Zonen entsprechend müssen die verwendeten Geräte und Vorrichtungen besondere Anforderungen erfüllen. Beispielsweise dürfen in der Zone 2/22 keine Geräte mit betriebsbedingten Zündquellen eingesetzt werden. Für Geräte mit Zündgefahren, die in der Zone 1/21 verwendet werden sollen, darf auch bei Auftreten einer Funktionsstörung die Wirksamkeit der Zündquellenvermeidung nicht beeinträchtigt sein. In der Zone 0/20 müssen bei der Auslegung der Geräte auch sehr unwahrscheinliche Betriebssituationen, die zu einer Zündquelle führen können, ausgeschaltet sein. Insbesondere sind diese Geräte der besonderen Verwendung anzupassen, bspw. mit einer druck- und/oder flammfesten Kapselung oder mit einer besonderen Eigensicherheit für die geräteeigene Stromversorgung (bspw. ausserhalb der Gefahrenzone), für die elektronischen Schaltkreise (bspw. mittels Vergussmasse), für selbst erzeugtes Licht (bspw. mit einer Kaltlichtquelle) oder mit Massnahmen zur Begrenzung der Gerätetemperatur (bspw. durch Wärmeleitung), insbesondere um die Oberflächentemperatur unterhalb der Zündtemperatur zu halten. Mit NH (non-hazard) werden Zonen bezeichnet, in denen kein Gefahrenpotential vorliegt.

Vorrichtungen zur Inspektion und Beobachtung von explosionsgeschützten Reaktionsbehältern, insbesondere von chemischen Reaktoren in der chemischen Industrie, sind seit längerem bekannt. So wird bspw. in der DE-10'2013'020'896 eine Vorrichtung zur kontinuierlichen Inspektion eines Behälters für die industrielle Produktion im explosionsgeschützten Bereich beschrieben. Diese Vorrichtung weist ein explosionsgeschütztes Gehäuse (für einen Ultraschallwellenwandler und entsprechende Sende- und Empfangselektronik) mit ex-geschützten Kabeldurchführungen auf und kann deshalb im ex-geschützten Bereich verwendet werden. Leider eignet sich diese Vorrichtung nur für die Werkstoffprüfung, d.h. Überprüfung von Riss- und Korrosionsbildung. Damit lassen sich keine prozessspezifischen Parameter beobachten, resp. erlaubt dieses System keine prozessbegleitende Beobachtung der chemischen Prozesse.

Weit verbreitet sind heute optische Inspektionsvorrichtungen, insbesondere mit einem ex-geschützten Video-Endoskop-Gehäuse, bei welchen, wie bspw. in der US-2007/0177010 beschrieben, lediglich ein Kamerakopfmodul in die Gefahrenzone 0 oder 1 eingeführt wird, während ein dazugehöriges Muttergerät mit Stromversorgung in der Zone 2 oder NH verbleiben kann. Auch dieses Endoskop eignet sich lediglich für die Schadens- und Korrosionsinspektion von geöffneten, d.h. ausgeschalteten Maschinen, chemischen Reaktionsbehältern oder Turbinen. Diese Art von Vorrichtungen erlauben ebenfalls keine prozessbegleitenden Beobachtungen, resp. Analyse und Steuerung eines laufenden Produktionsprozesses.

Aufgabe der vorliegende Erfindung besteht darin, ein Process-Scope, d.h. eine Vorrichtung zur Beobachtung und Überwachung von chemischen und physikalischen Abläufen im Innern von Behältern, resp. Reaktoren in explosionsgeschützten Bereichen, insbesondere in grosstechnischen Anlagen, zu schaffen, welche die Beobachtung und Überwachung zur Steuerung eines Produktionsprozesses während des Betriebs intermittierend oder kontinuierlich, d.h. in jedem Fall in-line oder in-situ ohne Unterbrechung des Produktionsprozesses, erlauben.

Diese Aufgabe wird erfindungsgemäss mit einer Vorrichtung gemäss Anspruch 1 gelöst und insbesondere mit einem zonengetrennten Videoskop (Process-Scope), welches für die Verwendung in exlosionsgeschützten Bereichen insbesondere in grosstechnischen Produktionsanlagen geeignet ist. Das erfindungsgemässe Process-Scope umfasst zonengetrennte Baugruppen und weist ein in der Gefahrenzone 1/21 oder 2/22 verwendbares, d.h. zündquellenfreies und explosionsgeschütztes Gehäuse (protective housing) auf, sowie einen in der Gefahrenzone 0/20 oder 1/21 verwendbaren, d.h. zündquellenfreien und explosionsgeschützten Beobachtungstubus mit robuster Tubusspitze. Für die Lichtübertragung von der Beleuchtungsvorrichtung zur Tubusspitze als auch für die Bildübertragung von der Tubusspitze zur elektro-optischen Kamera sind optische Kabel oder Lichtwellenleiter in Stabform vorgesehen. Für die Datenübertragung, der vorzugsweise nicht-komprimierten Bilddaten, von der elektro-optischen Kamera zum Datenerfassungs-, Datenanalyse- und Datenaufzeichnungssystem ist ein typischerweise bis zu ca. 500 m langes Singlemode- oder Multimode-Glasfaser-Datenkabel vorgesehen.

In einer bevorzugten Ausführungsform weist die Tubusspitze mindestens ein Beobachtungs-Frontfenster und mindestens ein Beleuchtungs-Frontfenster auf, wobei die jeweiligen Frontfenster einander benachbart liegend angeordnet sind. In einer anderen Ausführungsform weist die Tubusspitze ein zentral angeordnetes Beobachtungs-Frontfenster und ein dazu konzentrisch angeordnetes Beleuchtungs-Frontfenster auf. In einer weiteren Ausführungsform ist mindestens ein Beobachtungs-Frontfenster und/oder mindestens ein Beleuchtungs-Frontfenster ein bi-planes Element oder ein Element in Form eines Zylinderabschnittes, resp. Kegelstumpfes.

Es versteht sich, dass diese Frontfenster mit einer Reinigungseinheit (nicht dargestellt) versehen sein können, insbesondere mit einer Einheit, mit welcher ein gasförmiger oder flüssiger Strömungsfilm über der Aussenfläche mindestens eines der Frontfenster erzeugt werden kann, um das Festsetzen von Reaktionsmaterial an diesen Frontfenstern zu verhindern.

In einer privilegierten Ausführungsform der vorliegenden Erfindung weist die Tubusspitze eine druckfeste Doppelsperre auf. Diese Doppelsperre umfasst eine distal angeordnete, erste Dichtungssperre und eine proximal angeordnete zweite Dichtungssperre, wobei bei der ersten Dichtungssperre zwischen jeder der Passflächen der passgenau aneinander liegenden Tubus-Komponenten mindestens eine erste Dichtung vorgesehen ist und bei der zweiten Dichtungssperre zwischen jeder der Passflächen der passgenau aneinander liegenden Tubus-Komponenten mindestens eine zweite Dichtung vorgesehen ist. Diese Doppelsperre ist für einen Prozessdruck von mind. 100 bar druckdicht und weist bei ungekühltem Tubus eine Hitzeresistenz von bis zu ca. 350 °C auf.

In einer Weiterbildung der erfindungsgemässen Tubusspitze sind die Beleuchtungs- und/oder Beobachtungs-Frontfenster mit innen- oder aussenliegenden optischen Mitteln, insbesondere einem Prisma und/oder einer Facette und/oder einer Blende und/oder einer Linse, versehen, und für die Verwendung zur bspw. parallaktischen Distanzmessung in geeigneter Weise ausgerichtet.

Darüber hinaus sind bei dieser Weiterbildung die lateral in der Tubusspitze angeordneten Frontfenster mit einer Halteplatte gesichert. Um das Anhaften von Partikein aus dem Partikelstrom zu minimieren und um den Licht- und Bildkegel möglichst frei zu halten, weist die von Partikeln umströmte Tubusspitze eine Aussenkontur, insbesondere eine diamantartige, hufeisenförmige oder eine andere strömungsoptimierte Kontur auf, die geeignet ist, die vom Partikelstrom erzeugte Abrasion an der Aussenseite der Tubusspritze zu verringern. Ausserdem kann der Innenraum der Tubusspitze mit einem fliessfähigen, insbesondere mit einem rieselfähigen Material, gefüllt sein.

Erfindungsgemäss sind in dem Gehäuse eine Beleuchtungsvorrichtung, eine elektronische Steuerschaltung und eine elektro-optische oder spektroskopische Kamera angeordnet. Weiter ist dieses Gehäuse für die Vermeidung von explosionserzeugende Zündungen bevorzugt mit einer Durchflutungsvorrichtung gekoppelt. Diese Durchflutungsvorrichtung erlaubt es, das Gehäuse einerseits mit einem wärmeableitenden Schutzgas (insbesondere Luft) zu durchfluten und dieses andererseits mit einem erhöhten Innendruck zu versehen, bspw. in dem in gleicher Zeit mehr Gas in dieses Gehäuse eingebracht als abgeführt wird. Das vorteilhafterweise aus eloxiertem Aluminium bestehende Gehäuse steht zur Wärmeableitung in einer Kontaktverbindung mit der elektro-optischen Kamera und der Beleuchtungsvorrichtung mit einer Lichtquelle von üblicherweise 10 W.

In einer besonderen Ausführungsform umfasst die Durchflutungsvorrichtung eine Schutzgas-Versorgungseinheit, welche über eine Zufuhrleitung mit dem Gehäuse verbunden ist. Diese Versorgungseinheit umfasst einen Druckregler und ein Drosselventil, welches von einer elektronischen Kontroll-Einheit gesteuert ist. Diese Kontroll-Einheit ist vorzugsweise ebenfalls im Gehäuse angeordnet. Die Schutzgas-Zufuhrleitung ist an einer ersten Anschlussöffnung des Gehäuses befestigt und die Schutzgas-Abzugsleitung ist an einer zweiten Anschlussöffnung des Gehäuses befestigt.

Es versteht sich, dass die erste und zweite Anschlussöffnungen sowie die im Innern des Gehäuses vorgesehenen Komponenten, insbesondere die Beleuchtungsvorrichtung, die elektronische Steuerschaltung, die elektro-optische oder spektroskopische Kamera, die elektronische Kontroll-Einheit und allfällige zusätzliche Stege und Rippen, derart angeordnet sind, dass diese mit dem Gehäuse einen komplexen und vollständig durchströmbaren Hohlkörper bilden. Dieser Hohlkörper ermöglicht einen raschen und vollständigen Schutzgas-Austausch mit hoher Konvektion (Wärmemitführung). Die gezielte Anordnung der einzelnen Komponenten erlaubt die Erzeugung einer strömungsoptimierten Durchflussrate, d.h. einer laminaren Volumenströmung.

In einer besonderen Ausführungsform sind die ersten und zweiten Anschlussöffnungen im Wesentlichen einander diagonal gegenüberliegend angeordnet.

Erfindungsgemäss ist die im Gehäuse angeordnete elektronische Kontrolleinheit über eine erste ex-geschützte Kabeldurchführung für ein Stromkabel mit einer externen Stromversorgungseinheit verbunden und ist die im Gehäuse angeordnete elektro-optische oder spektroskopische Kamera über eine zweite Kabeldurchführung für ein Datenkabel mit einem externen Datenerfassungs-, Datenanalyse- und Datenaufzeichnungssystem verbunden. Normalerweise erfüllen die externe Stromversorgungseinheit und das externe Datenerfassungs-, Datenanalyse- und Datenaufzeichnungssystem keine besonderen Auflagen bezüglich des Explosionsschutzes, d.h. sind nur in der Gefahrenzone NH verwendbar und auch in diesem Bereich angeordnet. Für die erfindungsgemässe Vorrichtung ist die Stromversorgungseinheit jedoch mit einer Sicherungsvorrichtung versehen, welche sicherstellt, dass der Strom für das zu erzeugende Licht beschränkt wird, um unzulässige Lichtintensitäten zu vermeiden.

Weitere besondere Ausführungsformen und Weiterbildungen des erfindungsgemässen Process-Scope weisen die Merkmale der Unteransprüche auf.

Das erfindungsgemässe Process-Scope erlaubt erstmals eine prozessbegleitende in-line oder in-situ Beobachtung für die Steuerung von Prozessabläufen in explosionsgeschützten Bereichen, bspw. bei grosstechnischen Reaktorbehältern der chemischen oder petrochemischen Industrie, insbesondere bei einem Mehrzonen-Reaktor (multizone reactor) und bei aussergewöhnlich hohen Drücken, wie er für die Herstellung von Polymerpartikeln aus Polypropylen (PP) oder Polyethylen (PE) eingesetzt und bspw. in der US-5'698'642 beschrieben wird oder insbesondere bei Reaktoren mit aussergewöhnlich hohen Temperaturen, wie sie beispielsweise bei der Verbrennung von festen Brennstoffen in Kraftwerken zum Einsatz kommen.

Bei einem Mehrzonen-Reaktor können die Kunststoffpartikel bei der Polymerisation in den einzelnen Polymerisationszonen in-line oder in-situ beobachtet werden und die Beobachtungsresultate für die Optimierung des Prozessablaufes eingesetzt werden. Diese elektro-optische Vorrichtung eignet sich insbesondere für die prozessbegleitende Bildanalyse, bspw. zur Bestimmung der aktuellen Partikelparameter, wie Bewegungsrichtung, Geschwindigkeit, Oberflächenbeschaffenheit, Grösse, Form sowie der Füllhöhe der Polymerpartikeln im Reaktorbehälter und/oder zur Optimierung des aktuellen Produktionsprozesses.

Im Folgenden soll unter dem Ausdruck "distal angeordnet" der Bereich der Tubusspitze gemeint sein, unabhängig von der räumlichen Lage und Anordnung der jeweiligen Elemente in diesem Bereich.

Mit den Begriffen "in-line" oder "in-situ" soll zum Ausdruck gebracht werden, dass die Beobachtung nicht off-line oder on-line geschieht, sondern die Beobachtung direkt im Prozess und ohne Probeentnahme erfolgt.

Der Begriff "zündquellenfrei" soll alle Mittel umfassen, mit welchen die Leuchtmittel, insbesondere LEDs und deren Stromversorgung so ausgestaltet und geregelt sind, dass auch im Störungsfall (bspw. mit Kurzschluss- und Emissions-Peak) die Richtwerte gemäss Explosionsschutz-Anforderungen für Vorrichtungsbauteile im Bereich der Zone 0/20 oder 1/21 eingehalten werden.

Die vorliegende Erfindung soll im Folgenden anhand eines Ausführungsbeispiels und mit Hilfe der Figuren näher erläutert werden.

Dabei zeigt:
- Fig. 1:: schematisch-räumliche Darstellung eines erfindungsgemässen Process-Scope;
- Fig. 2:: schematische Darstellung zur elektronischen Schaltung des erfindungsgemässen Process-Scope;
- Fig. 3:: schematische Aufsicht auf ein geöffnetes, erfindungsgemässes Gehäuse;
- Fig. 4:: schematischer Längsschnitt durch eine erste Ausführungsform einer erfindungsgemässen Tubusspitze mit mindestens einem optischen Beleuchtungslichtleiter;
- Fig. 5:: schematische Frontansicht auf eine erfindungsgemässe Tubusspitze mit drei Beleuchtungs-Frontfenstern und einem Beobachtungs-Frontfenster;
- Fig. 6:: schematischer Längsschnitt durch eine erfindungsgemässe Tubusspitze mit mindestens einem optischen Beleuchtungslichtleiter und mit asymmetrischen Frontfenstern;
- Fig. 7:: schematischer Längsschnitt durch eine zweite Ausführungsform einer erfindungsgemässen Tubusspitze mit einem ringförmigen Beleuchtungslichtleiter;
- Fig. 8:: schematischer Längsschnitt durch eine weitere Ausführungsform einer erfindungsgemässen Tubusspitze mit einem ringförmigen Beleuchtungslichtleiter und mit asymmetrischen Frontfenstern;
- Fig. 9: schematischer Längsschnitt durch eine bevorzugte Ausführungsform einer erfindungsgemässen Tubusspitze mit lateral angeordneten Frontfenstern;
- Fig. 10: schematische Untersicht auf die Ausführungsform gemäss Fig. 9;
- Fig. 11: schematische Darstellung einer räumlichen Ansicht der Ausführungsform gemäss Fig. 9;
- Fig. 12: schematischer Längsschnitt durch die Ausführungsform gemäss Fig. 9 mit zusätzlicher Halteplatte.

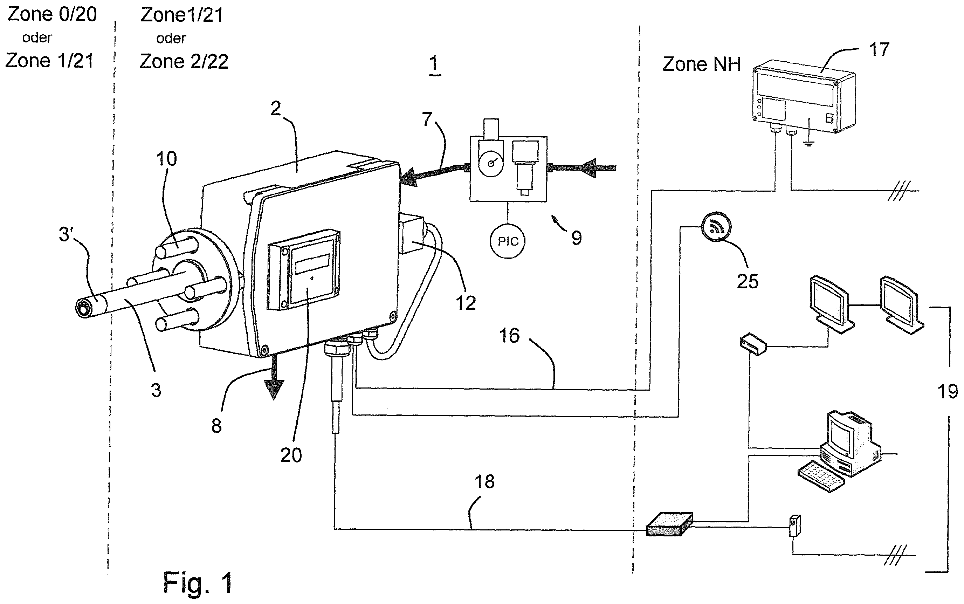

Die schematisch-räumliche Darstellung in Fig. 1 macht die Anordnung der einzelnen Baugruppen des erfindungsgemässen Process-Scope 1 deutlich. Insbesondere ragt der Beobachtungstubus 3 mit seiner Tubusspitze 3' in den Bereich mit der höchsten Gefahrenstufe, d.h. in die Zone 0/20 oder bis in die Zone 1/21. Dabei erweist es sich als wesentlich für die Erfindung, dass die Tubusspitze 3' und der Beobachtungstubus 3 keine aktiven Bauelemente aufweisen. Das Schutzgehäuse 2 ist mit einer Halterung 10 für die Befestigung an einem Behälter oder Reaktor versehen, insbesondere um eine störungsfreie Verbindung mit diesen zu gewährleisten. Ein Controller-Display 20 erlaubt das Ablesen gerätespezifischer Daten, wie Temperatur, Innendruck, etc.. Das Gehäuse 2 erfüllt die IEC/EN Bedingungen für Gehäuse in Zone 1/21 oder 2/22, d.h. weist im Innern eine sogenannte unter Druck stehende "Ex p"-Durchflutungsvorrichtung 7, 8, 9, 12, 15 gemäss dieser Richtlinien auf, um dieses Gehäuse 2 mit einem Schutzgas, insbesondere Luft, zu durchfluten und um dieses mit einem erhöhten Innendruck von ca. 5 bis 20 mbar, vorzugsweise von ca. 10 mbar, zu versehen. Dazu ist das Gehäuse mit einer Schutzgas-Zufuhrleitung 7 und einem Schutzgas-Abzug 8 verbunden. Die Schutzgas-Zufuhr wird aus der Zone NH heraus gespeist und in der Zone 1/21 oder 2/22 mit Hilfe eines Druckreglers 9 und eines von einer elektronischen Kontrolleinheit 11 gesteuerten Drosselventils 12 geregelt. Die Stromversorgung wird über ein Stromkabel 16 sichergestellt. Ein Datenkabel 18, welches eine Länge von bspw. über 300 m bis 500 m aufweist, verbindet die Kameradaten mit einem in der Zone NH angeordneten Datenerfassungs-, Datenanalyse und Datenaufzeichnungssystem 19. Ein Alarmgeber 25 in der Zone NH erlaubt die Überwachung der im Schutzgehäuse angeordneten elektronischen Kontrolleinheit 11. Es versteht sich, dass das Datenerfassungs-, Datenanalyse- und Datenaufzeichnungssystem 19 in einer Weiterbildung mindestens ein Analyse-Modul umfasst, mit welchem erforderliche Kenngrössen für die Steuerung und Regelung zur Optimierung der genannten Prozessabläufe bestimmbar und messbar sind, um die Vorrichtung als videobasierte Einheit zur prozessbegleitenden Echtzeit-Messung von, für die Steuerung und Regelung zur Optimierung, erwünschter Kenngrössen zu verwenden. Solche für die Steuerung und Regelung zur Optimierung erwünschte und/oder erforderliche, durch entsprechend vorgesehene Bild-Analyse-Module ermittelte, Kenngrössen sind, beispielsweise bei Mehrphasen-Prozessen, beispielsweise:
- die Geschwindigkeit von Feststoffen, Blasen, Tröpfchen;
- die Grössenverteilung von Feststoffpartikeln, Blasen, Tröpfchen (bspw. Particle Size Distribution (PSD) von Feststoffpartikeln in Gas);
- Kenngrössen, welche die Morphologie von Feststoffpartikeln charakterisieren (broken particle count, shape factors as e.g. sphericity, aspect ratio, convexity, etc.);
- Kenngrössen, welche die aktuellen Prozessbedingungen charakterisieren (z.B. bulk/not-bulk conditions);
- Schwellenwerte zum Auslösen von Alarmen bei ungünstigen Prozessbedingungen (z.B. Junk Alarm);
- Kenngrössen zu Distanzmessungen (z.B. Oberflächenhöhe einer Schüttung);
- weitere auf Basis der Bilddaten ermittelte und für die Steuerung und Regelung des Prozesses aussagekräftige Kenngrössen

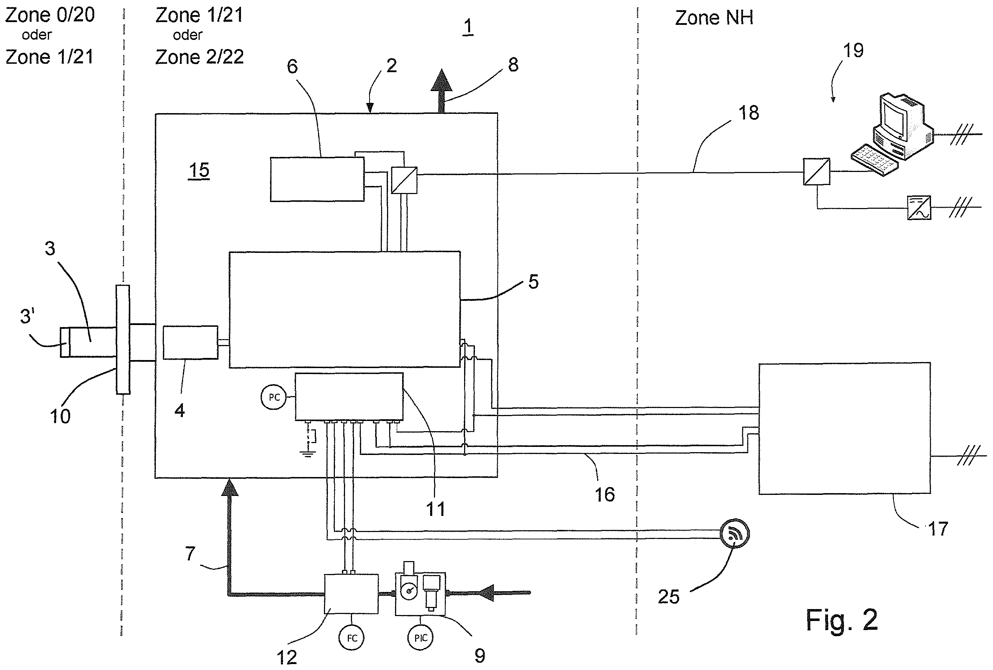

Fig. 2 zeigt eine schematische Darstellung zur elektronischen Schaltung des erfindungsgemässen Process-Scope 1 und deren räumlich Anordnung in den besonderen Gefahrenzonen. Dabei wird deutlich, dass in der Zone 0/20 (oder Zone 1/21) nur passive Bauelemente vorgesehen sind. d.h. lediglich der Beobachtungstubus 3 mit seiner Tubusspitze 3' in diesen Bereich ragt. Das zurückliegende Schutzgehäuse 2 ist mit einer robusten und stabilen Halterung 10 am zu beobachtenden Behälter oder Reaktor (nicht dargestellt) befestigt. Im Gehäuse-Innenraum 15 des Schutzgehäuses 2 sind eine Beleuchtungsvorrichtung 4, eine elektro-optische oder spektroskopische Kamera 6, ein eine elektronische Schutzschaltung 5 für die Beleuchtungsvorrichtung 4 sowie eine elektronische Kontrolleinheit 11 für die Regelung der Schutzgasströmung und des von derselben im Gehäuse-Innenraum 15 erzeugten Innendrucks, vorgesehen.

Die Stromversorgungseinheit 17, das Datenerfassungs-, Datenanalyse- und Datenaufzeichnungssystem sowie ein Alarmgeber 25 sind in der ungefährdeten Zone NH angeordnet.

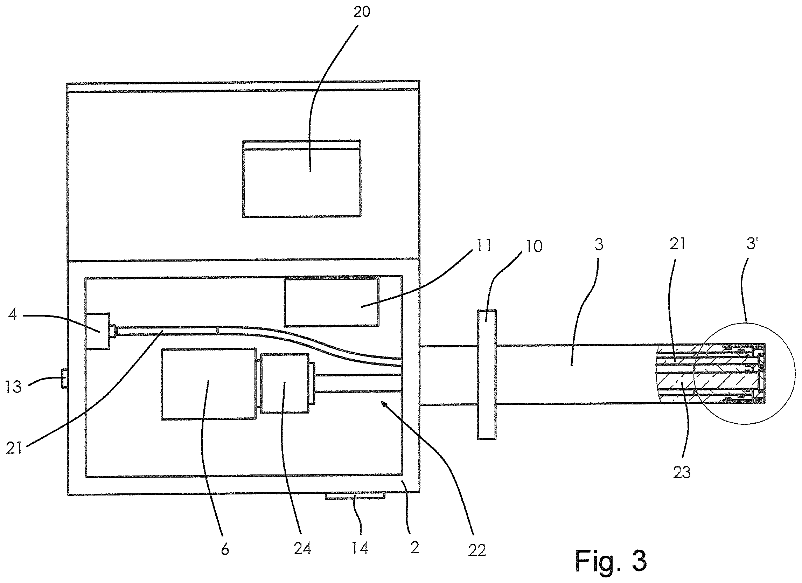

Die in Fig. 3 gezeigte schematische Aufsicht auf ein geöffnetes, erfindungsgemässes Gehäuse 2 macht die Anordnung der elektronischen Baugruppen deutlich. Dabei führt ein optischer, insbesondere faseroptischer Beleuchtungslichtleiter 21 das Licht der Beleuchtungsvorrichtung 4 in den Beobachtungstubus 3 und weiter bis in die Tubusspitze 3'. Ein Lichtwellenleiter, insbesondere ein endoskopischer Bildleiter 23, bspw. mit einer Stablinse oder einem Faserbündel, führt die Bildinformationen über ein Objektiv 24 von der Tubusspitze 3' zurück zur elektro-optischen Kamera 6 einer Endoskops 22. Die Beleuchtungsvorrichtung 4 und die elektronische Kontrolleinheit 11 sind im Gehäuse-Innenraum 15 vorzugsweise derart angeordnet, dass diese vom Schutzgas, welches von einer ersten Anschlussöffnung 13 zu einer zweiten Anschlussöffnung 14 strömt, kontinuierlich umströmt werden. Darüber hinaus schaltet die Kontrolleinheit 11 alle elektronischen Komponenten spannungsfrei aus, wenn der Überdruck im Innern des Gehäuses zusammenfällt, bspw. beim Öffnen desselben. Das Kontroller-Display 20 ist im Deckelteil des Schutzgehäuses 2 angebracht und zeigt u.a. die Innentemperatur (typischerweise -15 °C bis 50 °C), die rel. Luftfeuchtigkeit und den Innendruck an.

Die Halterung 10 erlaubt eine sichere Befestigung des Process-Scope 1 an einem Behälter oder Reaktor. Das Schutzgehäuse 2 ist vorteilhafterweise aus eloxiertem Aluminium gefertigt, während der Beobachtungstubus 3 einen Tubus-Mantel 35 aus rostfreiem Stahl aufweist.

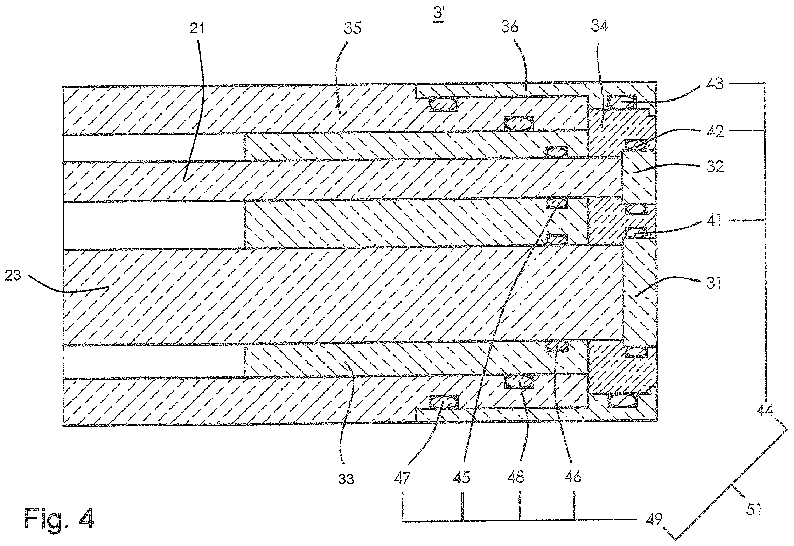

Fig. 4 zeigt einen schematischen Längsschnitt durch eine erste Ausführungsform einer erfindungsgemässen Tubusspitze 3' mit mindestens einem optischen Beleuchtungslichtleiter 21. Erfindungsgemäss weist die Tubusspitze 3' eine druckfeste Doppelsperre 51 auf. Diese Doppelsperre 51 umfasst eine distal liegende, erste Dichtungssperre 44 und eine proximal liegende zweite Dichtungssperre 49, wobei für die erste Dichtungssperre 44 zwischen jeder der Passflächen der passgenau aneinander liegenden Tubus-Komponenten, insbesondere zwischen einem Tubus-Verschlussstück 36 und einer Frontfenster-Halterung 34 sowie zwischen einem stirnseitigen Beleuchtungsfrontfenster 32 und der Frontfensterhalterung 34 sowie zwischen einem stirnseitigen Beobachtungs-Frontfenster 31 und der Frontfensterhalterung 34 jeweils mindestens eine erste Front-Dichtung 43, eine Beleuchtungs-Frontfenster-Dichtung 42 und eine Beobachtungs-Frontfensterdichtung 41, vorgesehen ist und für die zweite Dichtungssperre 49 zwischen jeder der Passflächen der passgenau aneinander liegenden Tubus-Komponenten, insbesondere zwischen dem Tubus-Verschlussstück 36 und einem Tubusmantel 35 sowie zwischen dem Tubusmantel 35 und der Bildleiter-Fassung 33 sowie zwischen der Bildleiter-Fassung 33 und dem optischen Bildleiter 23 sowie zwischen der Bildleiter-Fassung 33 und dem Beleuchtungslichtleiter 21 jeweils mindestens eine zweite Tubusverschlussdichtung 48, eine Tubusmantel-dichtung 47, eine Lichtleiterdichtung 46 und eine Bildleiterdichtung 45, vorgesehen ist. Diese Doppelsperre ist für einen Prozessdruck von mind. 100 bar druckdicht. Die Tubusspitze 3' weist bei ungekühltem Tubus 3 eine Hitzeresistenz von bis zu ca. 350 °C auf. Es versteht sich, dass diese Temperaturbeständigkeit durch eine geeignete Kühlung der Tubusspitze 3' erhöht werden kann.

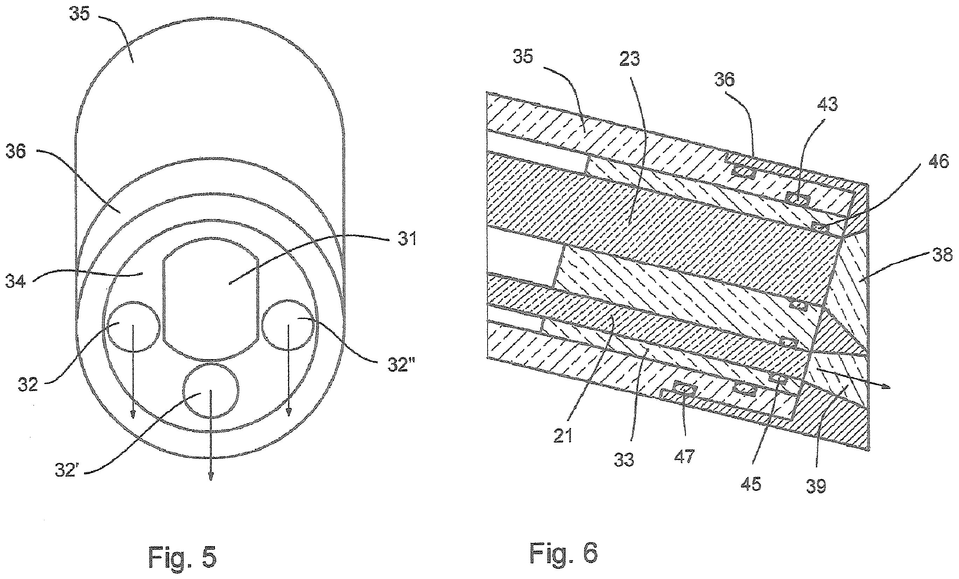

In einer Weiterbildung der erfindungsgemässen Tubusspitze 3' weist diese zusätzliche Beleuchtungslichtleiter auf. Die in Fig. 5 dargestellte schematische Frontansicht einer Tubusspitze 3' mit mehreren Beleuchtungslichtleitern lässt neben dem Beleuchtungs-Frontfenster 32 ein zweites Beleuchtungsfenster 32' und ein drittes Beleuchtungsfenster 32" sowie ein maximiertes Beobachtungs-Frontfenster 31 erkennen. Diese Fenster werden in einer Frontfenster-Halterung 34 gehalten, welche über ein Tubus-Verschlussstück 36 mit dem Tubusmantel 35 verbunden ist.

Der in Fig. 6 dargestellte schematische Längsschnitt durch eine erfindungsgemässe Tubusspitze 3' mit mindestens einem optischen Beleuchtungslichtleiter zeigt ein stirnseitiges Beleuchtungs-Frontfenster 39 in Form eines asymmetrischen Kegelstumpfes und ein stirnseitiges Beobachtungs-Frontfenster 38 in Form eines asymmetrischen Kegelstumpfes. Diese asymmetrische Ausführungsform erlaubt eine nicht-orthogonale Befestigung der Tubusspitze 3' am Behälter oder am Reaktor und führt zu einem anderen Blickwinkel ins Innere des Behälters oder Reaktors. Es versteht sich, dass auch bei dieser Ausführungsform mehrere asymmetrische Beleuchtungsfenster vorgesehen sein können. Die in dieser Fig. 6 dargestellten Dichtungselemente entsprechen denjenigen in der Fig. 4 und genügen den Erfordernissen einer ersten Dichtungssperre 44. Der Fachmann wird in Kenntnis der oben beschriebenen Ausführungsform ohne weiteres auch eine zweite Dichtungssperre 49 vorsehen können um eine Doppelsperre 51 zu realisieren.

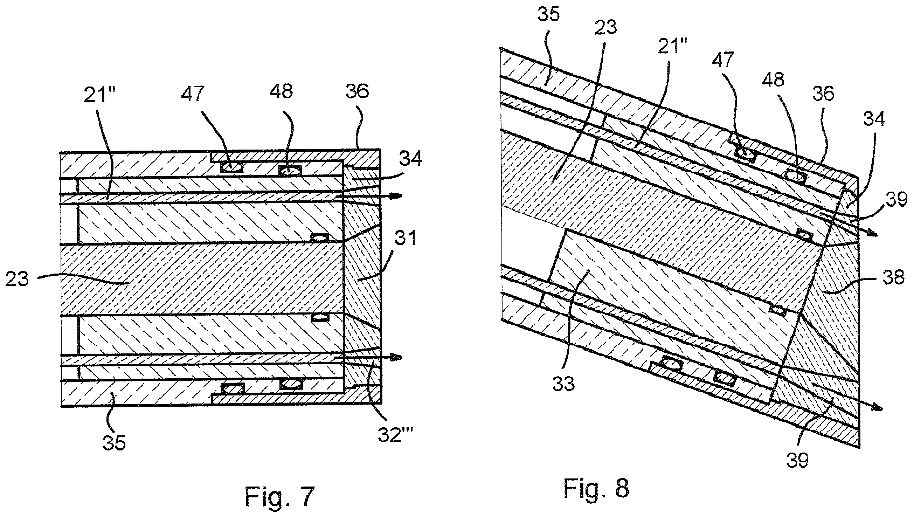

Der in Fig. 7 dargestellte schematische Längsschnitt durch eine zweite Ausführungsform einer erfindungsgemässen Tubusspitze 3' zeigt einen zentral angeordneten Bildleiter 23 mit einem konzentrisch dazu angeordneten ringförmigen Beleuchtungslichtleiter 21''. Darüberhinaus weisen die dazugehörigen stirnseitigen Frontfenster 31 und 32" konisch ausgebildete Seitenflächen auf, insbesondere um Reflektionen und Abstrahlverluste an den Seitenwänden zu vermeiden. Als besonders geeignetes Material für die Verwendung als Frontfenster für das erfindungsgemässe Process-Scope hat sich Saphierglas erwiesen.

Der in Fig. 8 dargestellte schematischer Längsschnitt durch eine weitere Ausführungsform einer erfindungsgemässen Tubusspitze 3' zeigt stirnseitig ein asymmetrisch kegelstumpfförmiges Beobachtungs-Frontfenster 38 sowie ein ringförmiges Beleuchtungs-Frontfenster 39 mit asymmetrisch kegelstumpfförmigen Seitenflächen. Der dazugehörige Beleuchtungslichtleiter 21" kann aus einem ringförmig angeordneten Lichtleiter-Faserbündel gebildet sein. Diese Ausführungsformen erlauben es eine zur Tubusachse abgewinkelte Beobachtungs- und Detektionsrichtung zu erzeugen, insbesondere zur Distanzmessung.

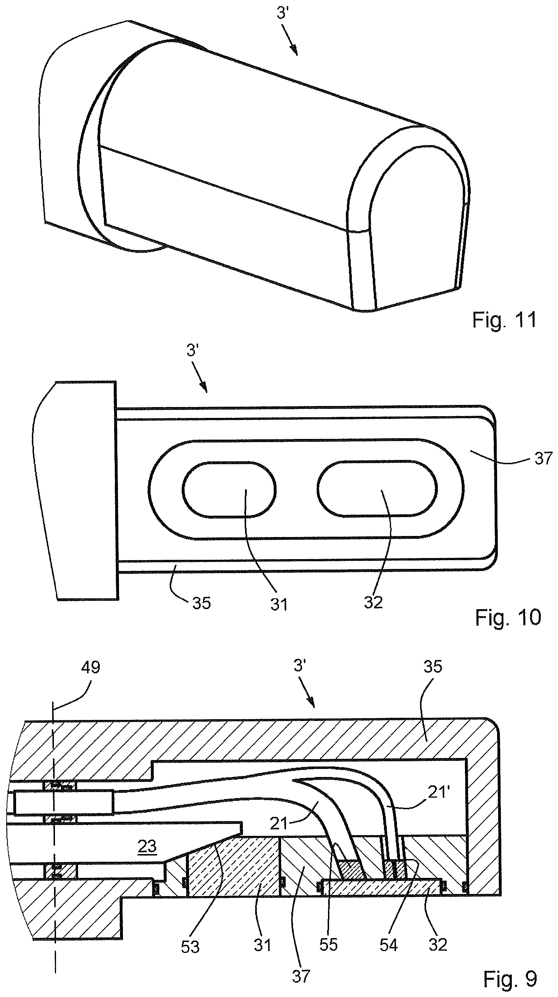

Der in Fig. 9 dargestellte Längsschnitt macht deutlich, dass die Frontfenster 31, 32 auch lateral in der Tubusspitze 3' angeordnet sein können, insbesondere wenn das Blickfeld in den unteren Bereich des Behälters gerichtet sein soll, wie dies vorteilhafter Weise für eine parallaktische Distanzmessung zur Bestimmung der Füllhöhe in Betracht gezogen wird. Dafür ist ein erster optischer Beleuchtungslichtleiter 21, vorzugsweise über ein Linsensystem 55 mit dem Beleuchtungs-Frontfenster 32 gekoppelt, um einen möglichst grossen Bereich (Weite, Tiefe) ausleuchten zu können. Darüberhinaus ist ein zusätzlicher optischer Zusatz-Beleuchtungslichtleiter 21' für das, für eine parallaktische Messung erforderliche, strukturierte oder gemusterte Projektionslicht (structured light), mit einer Projektionsoptik 55 gekoppelt, welche bspw. zur Projektion eines Gitter- oder Strichmusters, wie es von Strichplatten bei optischen Mess- und Zielgeräten oder in einfachster Weise als ein 2-teiliges Hell-/Dunkelfeld, bekannt ist. Der optische Bildleiter 23 ist mit einer Facette 53 des Beobachtungs-Frontfensters 31 gekoppelt und kann damit mindestens das beleuchtete Bildfeld im Wesentlichen erfassen. Bei dieser Ausführungsform ist die erste Dichtungssperre 44 lateral zwischen den optischen Elemente 31, 32 in der Tubusspitze 3' angeordnet und die zweite Dichtungssperre 49 dahinterliegend vorgesehen.

Es versteht sich, dass der Innenraum der Tubusspitze 3' mit einem Füllmaterial, insbesondere mit einem fliess- oder rieselfähigen Material gefüllt werden kann, insbesondere auch um das Explosionsrisiko weiter zu minimieren.

Fig. 10 zeigt die Untersicht der in Fig. 9 dargestellten Ausführungsform der Tubusspitze 3' und macht die Anordnung der beiden, im Boden 37 des Tubusmantel 35 gehaltenen Frontfenster 31, 32 deutlich, deren geometrischer Versatz für die parallaktische Distanzmessung wesentlich ist.

Die in Fig. 11 gezeigte Darstellung zeigt die Ausführungsform, wie in den Fig. 9, 10 beschrieben, d.h. eine Ausführungsform, bei welcher die Tubusspitze 3' in den Reaktionsbehälter hineinragt und damit dem Partikelstrom in demselben ausgesetzt ist. Um die damit verbundene Abrasion und das Anhaften von Partikeln zu reduzieren kann die Aussenkontur der Tubusspitze in geeigneter Weise gestaltet sein, insbesondere diamantförmig, strömungsoptimiert oder einen hufeisenförmigen Querschnitt aufweisen. Es versteht sich, dass der Fachmann weitere Massnahmen treffen kann um dem positionsbedingten Abrieb entgegenzuwirken, insbesondere durch das Anbringen von Prallblechen oder Partikel ablenkende Fluid-Gegenströmungen. Es versteht sich, dass mit diesen Mitteln auch die Licht- und Bildkegel für die bspw. parallaktische Vermessung von Partikeln freigehalten werden und damit die Bildqualität verbessert werden kann.

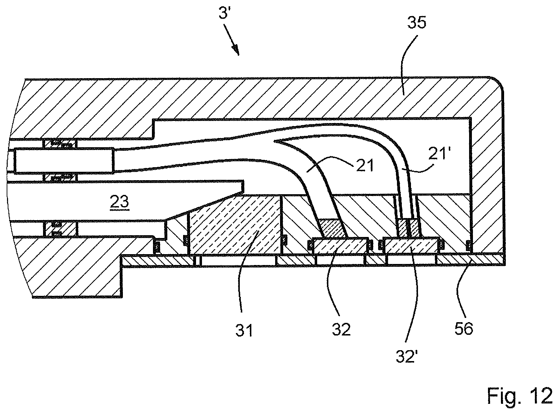

Der in Fig. 12 schematisch dargestellte Längsschnitt durch die Ausführungsform gemäss Fig. 9 weist eine zusätzliche Halteplatte 56 auf. Mit dieser Halteplatte 56 sollen Materialanhaftungen, welche die Auflösung und Genauigkeit der Messresultate einer bspw. parallaktischen Distanzmessung reduzieren würden, verhindern und kann aus jedem antistatischen Material, insbesondere einem metallisch oder transparenten Material, mit oder ohne Aussparungen gefertigt sein. Die hier dargestellte Ausführungsform umfasst separate Frontfenster 32, 32' für jede der Beleuchtungslichtleiter 21, 21', was das Ankoppeln der Projektionsoptik 54, resp. des Linsensystems an diese erleichtert.

Es versteht sich, dass der Beobachtungstubus und/oder dessen Tubusspitze fest oder verschiebbar an dem Behälter oder Reaktor befestigt sein kann und insbesondere in den Behälterinnenraum hineinragen kann. Insbesondere können aussenseitig der Tubusspitze prismatische Körper vorgesehen werden, um das Beleuchtungs- und Blickfeld bspw. in den unteren Teil des Behälters zu lenken. Darüber hinaus können die einzelnen Baugruppen und Komponenten im Innern des Schutzgehäuses zündquellenfrei ausgestaltet sein. Insbesondere kann die elektronische Steuerschaltung vergossen sein oder kann die Kamera zusätzlich gekapselt sein. Diese Kamera kann mit einer Fernbedienung gesteuert werden und eine Bildrate von bspw. bis zu 1'000 fps aufweisen, resp. eine Bildauflösung im Bereich von bspw. einigen MP. Für die Bildleitfasern wird vorteilhafterweise ein Biegeradius von weniger als 6 bis 10 cm eingehalten. Ebenso kann die Lichtquelle mit Kühlrippen gekoppelt sein und besondere Mittel für die Einkopplung des Lichtes (vorzugsweise von einer LED) in den Lichtleiter, resp. das Lichtleiter-Faserbündel vorgesehen sein. Die Lichtabstrahlung an der Tubusspitze weist typischerweise eine Abstrahlleistung von ca. 600 mW für kontinuierliches Licht, resp. von 20 mW/mm², also ca. 200 Im. Das Schutzgehäuse ist in einer bevorzugten Ausführungsform für einen Überdruck von 5 bis 20 mbar, vorzugsweise von 10 mbar ausgelegt und aus einem gut wärmeleitenden Metall, insbesondere aus eloxiertem Aluminium gefertigt. Die Tubusspitze hält ungekühlt Prozesstemperaturen von bspw. -50 °C bis 100 °C, resp. 150 °C und mit einem Kühlmantel gekühlt Temperaturen bis 1'500°C aus und widersteht einem Prozessdruck von bspw. bis zu 42 bar resp. 65 bar. Der Beobachtungstubus kann starr oder flexibel ausgestaltet sein und kann mehrere m lang sein. Natürlich lässt sich das vorliegende Process-Scope auch mit unterschiedlichen elektro-optischen Kameras ausrüsten, insbesondere mit unterschiedlicher Framerate, Auflösung, monochrom oder mit Farbauflösung, etc. Es versteht sich auch, dass die optischen Eigenschaften, wie Fokus, Vergrösserung oder Lichtintensität ferngesteuert eingestellt werden können. Ebenso kann für die Beobachtung anstelle von kontinuierlichem Licht ein gepulstes Beleuchtungslicht verwendet werden, welches mit der Bildaufnahmesequenz der Kamera abgestimmt ist.

Die Vorteile des vorliegenden Process-Scope sind dem Fachmann unmittelbar ersichtlich und insbesondere in seiner Robustheit, seiner einfachen Handhabung und seiner hochauflösenden Bildverarbeitung zu sehen. Insbesondere erweist sich dieses Process-Scope als sicher und resistent gegen Umgebungseinflüsse, ist vibrationsfest, korrosionsfest, chemieresistent, starkregenfest, feuchtigkeitsfest, salznebelfest, beständig gegen Vereisungs-/Eisregen, explosionsfest, abrasionsfest, sand- und staubfest, weist eine hohe optische und mechanische Stabilität auf, verhindert das Eindringen von Fremdkörpern wegen der dicht verschlossen mechanischen Verbindungsstellen und den gesicherten Ein- und Ausgangsanschlüssen, schirmt elektromagnetische Störungen ab und ist überall einsetzbar. Insbesondere erlaubt das erfindungsgemässe Process-Scope die Inspektion von Behältern oder Reaktoren in nukleartechnischen und pharmazeutischen Anlagen oder in der Petrochemie oder Ölindustrie.

### Bezugszeichenliste:

- 1: Process-Scope
- 2: Schutz-Gehäuse
- 3: Beobachtungstubus
- 3': Tubusspitze
- 4: Beleuchtungsvorrichtung
- 5: Elektronische Schutzschaltung
- 6: Elektro-optische oder spektroskopische Kamera
- 7: Schutzgas-Zufuhrleitung
- 8: Schutzgas-Abzug, Überdruckventil
- 9: Druckregler
- 10: Halterung für die Befestigung an einem Behälter oder Reaktor
- 11: elektronische Kontrolleinheit
- 12: Drosselventil
- 13: Erste Anschlussöffnung
- 14: Zweite Anschlussöffnung
- 15: Gehäuse-Innenraum
- 16: Stromkabel
- 17: Stromversorgungseinheit
- 18: Datenkabel
- 19: Datenerfassungs-, Datenanalyse- und Datenaufzeichnungssystem
- 20: Controller-Display
- 21: optischer Beleuchtungslichtleiter
- 21': Zusatz-Beleuchtungslichtleiter
- 21": ringförmiger Beleuchtungslichtleiter
- 22: Endoskop
- 23: optischer Bildleiter
- 24: Objektiv
- 25: Alarmgeber
- 31: Beobachtungs-Frontfenster
- 32: Beleuchtungs-Frontfenster
- 32': zweites Beleuchtungs-Frontfenster
- 32": drittes Beleuchtungs-Frontfenster 32‴ringförmiges Beleuchtungsfrontfenster
- 33: Bild- und Lichtleiter-Fassung
- 34: Frontfenster-Halterung
- 35: Tubus-Mantel
- 36: Tubus-Verschlussstück
- 37: Tubus-Mantel-Boden
- 38: asymmetrisches Beobachtungs-Frontfenster
- 39: asymmetrisches Beleuchtungs-Frontfenster
- 41: Beobachtungs-Frontfenster-Dichtung
- 42: Beleuchtungs-Frontfenster-Dichtung
- 43: Front-Dichtung
- 44: Erste Dichtungssperre
- 45: Bildleiter-Dichtung
- 46: Lichtleiter-Dichtung
- 47: Tubusmantel-Dichtung
- 48: Tubusverschluss-Dichtung
- 49: Zweite Dichtungssperre
- 51: Doppelsperre
- 53: Facette
- 54: Projektionsoptik
- 55: Linsensystem
- 56: Halteplatte
- 57: Innenraum der Tubusspitze

## Patentansprüche

1. Vorrichtung (1), insbesondere Process-Scope, für die Beobachtung, Überwachung, Steuerung und Regelung von chemischen und physikalischen Prozessabläufen im Innern von explosionsgeschützten Reaktionsbehältern in grosstechnischen Anlagen und während des Betriebs, d.h. ohne Unterbrechung des Produktions- und/oder Entwicklungs- und Forschungsprozesses,
welche Vorrichtung (1) einen Beobachtungstubus (3) mit einer Tubusspitze (3'), eine elektro-optische oder spektroskopische Kamera (6), ein Gehäuse (2) mit einer elektronischen Schutzschaltung (5) und einer Beleuchtungsvorrichtung (4), sowie eine Stromversorgungseinheit (17) und ein Datenerfassungs-, Datenanalyse- und Datenaufzeichnungssystem (19) mit einer Bildverarbeitungselektronik aufweist,
**dadurch gekennzeichnet, dass**
die Vorrichtung zonengetrennte Baugruppen umfasst, derart dass der Beobachtungstubus und
die Tubusspitze (3') nur passive Bauelemente enthalten, zündquellenfrei sind und für die Verwendung in einem explosionsgeschützten Bereich, insbesondere in der Gefahrenzone 0/20 resp. 1/21 eines explosionsgeschützten Bereiches, geeignet sind,
wobei das Gehäuse (2) für die Verwendung in einem explosionsgeschützten Bereich, insbesondere in der höchsten Gefahrenzone 1/21 und/oder zweithöchsten Gefahrenzone 2/22 eines explosionsgeschützten Bereiches, geeignet ist,
wobei die Stromversorgungseinheit (17) und das Datenerfassungssystem sowie das Datenanalyse- und Datenaufzeichnungssystem (19) für die Verwendung in einem explosionsgeschützten Bereich, insbesondere in der Gefahrenzone NH eines explosionsgeschützten Bereiches, geeignet ist,
wobei sowohl für die Lichtübertragung von der Beleuchtungsvorrichtung (4) zur Tubusspitze (3') als auch für die Bildübertragung von der Tubusspitze (3') zur elektro-optischen oder spektroskopischen Kamera (6) optische Lichtwellenleiter in Stabform vorgesehen sind,
und für die Datenübertragung der Bilddaten von der elektro-optischen oder spektroskopischen Kamera (6) zum Datenerfassungs-, Datenanalyse- und Datenaufzeichnungssystem (19) ein Singlemode- oder Multimode-Glasfaser-Datenkabel (18) vorgesehen ist.

2. Vorrichtung nach Anspruch 1, **dadurch gekennzeichnet, dass** die Tubusspitze (3') eine explosionsfeste Doppelsperre (51) aufweist, welche Doppelsperre (51) eine distal angeordnete, erste Dichtungssperre (44) und eine proximal angeordnete zweite Dichtungssperre (49) umfasst, wobei bei der ersten Dichtungssperre (44) zwischen jeder der Passflächen der passgenau aneinander liegenden Tubus-Komponenten (31 u. 34, 32 u. 34, 34 u. 36) der Tubusspitze (3') mindestens eine erste Dichtung (41, 42, 43) vorgesehen ist und wobei bei der zweiten Dichtungssperre (51) zwischen jeder der Passflächen der passgenau aneinander liegenden Tubus-Komponenten (23 u. 33, 33 u. 21, 33 u. 35, 35 u. 36) der Tubusspitze (3') mindestens eine zweite (45, 46, 47, 48) Dichtung vorgesehen ist,
wobei mindestens eine erste Dichtung und mindestens eine zweite Dichtung der Doppelsperre (51) für einen Prozessdruck von ca. 100 bar druckdicht ausgelegt sind und eine Prozesstemperatur-Resistenz von mindestens 150 °C aufweisen.

3. Vorrichtung nach Anspruch 2, **dadurch gekennzeichnet, dass** die Tubusspitze (3')
a) mindestens ein Beobachtungs-Frontfenster (31) und mindestens ein Beleuchtungs-Frontfenster (32) aufweist, welche Frontfenster (31, 32) einander benachbart liegend angeordnet sind, oder
b) ein zentral angeordnetes Beobachtungs-Frontfenster (31) und ein dazu konzentrisch angeordnetes, vorzugsweise ringförmiges Beleuchtungs-Frontfenster (32) aufweist,
wobei
c) mindestens ein Beobachtungs-Frontfenster (31) und/oder mindestens ein Beleuchtungs-Frontfenster (32) oder ein gemeinsames Beleuchtungs- und Beobachtungs-Frontfenster (nicht dargestellt) in Form eines biplanaren optischen Elementes oder in Form eines asymmetrischen Kegelstumpfes ausgebildet ist.

4. Vorrichtung nach Anspruch 3, **dadurch gekennzeichnet, dass** das mindestens eine Beleuchtungs-Frontfenster (31) und das mindestens eine Beobachtungs-Frontfenster (32) und/oder das gemeinsame Beleuchtungs- und Beobachtungs-Frontfenster stirnseitig oder lateral in der Tubusspitze (3') angeordnet sind und insbesondere aus Saphirglas gefertigt sind.

5. Vorrichtung nach Anspruch 4, **dadurch gekennzeichnet, dass** die Beleuchtungs- und/oder Beobachtungs-Frontfenster (31, 32) mit innen- oder aussenliegenden optischen Mitteln, insbesondere einem Prisma und/oder einer Facette (53) und/oder einer Blende (54) und/oder einer Linse (55), versehen sind, und für die Verwendung zur Distanzmessung in geeigneter Weise ausgerichtet sind.

6. Vorrichtung nach Anspruch 5, **dadurch gekennzeichnet, dass** die lateral in der Tubusspitze (3') angeordneten Frontfenster (31, 32, 32') mit einer Halteplatte (56) gesichert sind, insbesondere auch um das Anhaften von Partikeln aus dem Partikelstrom zu minimieren.

7. Vorrichtung nach Anspruch 5, **dadurch gekennzeichnet, dass** die umströmte Tubusspitze (3') eine Aussenkontur, insbesondere diamantförmig, strömungsoptimiert oder mit einen hufeisenförmigen Querschnitt, aufweist, die geeignet ist, um das Anhaften von Partikeln und die vom Partikelstrom erzeugte Abrasion auf der Aussenseite der in den Behälter ragenden Tubusspitze (3') zu reduzieren.

8. Vorrichtung nach Anspruch 5, **dadurch gekennzeichnet, dass** der Innenraum der Tubusspitze (3') mit einem fliessfähigen, insbesondere mit einem rieselfähigen Material, gefüllt ist.

9. Vorrichtung nach Anspruch 3, **dadurch gekennzeichnet, dass** mindestens eines der jeweiligen Frontfenster (31, 32) der Tubusspitze (3') mit einer Reinigungseinheit (nicht dargestellt) versehen ist, insbesondere mit einer Einheit, mit welcher ein flüssiger oder gasförmiger Strömungsfilm über der Aussenfläche mindestens eines der jeweiligen Frontfenster (31, 32) intermittierend oder kontinuierlich erzeugbar ist.

10. Vorrichtung nach Anspruch 2, **dadurch gekennzeichnet, dass** das Gehäuse (2) mit einer "Ex p"-Durchflutungsvorrichtung (7, 8, 9, 12, 15) gekoppelt ist, um dieses mit einem Schutzgas, insbesondere Luft, zu durchfluten und um dieses mit einem erhöhten Innendruck von ca. 5 bis 20 mbar, vorzugsweise von ca. 10 mbar, zu versehen.

11. Vorrichtung nach Anspruch 10, **dadurch gekennzeichnet, dass** die Durchflutungsvorrichtung (7, 8, 9, 12, 15) eine Schutzgas-Versorgungseinheit (nicht dargestellt) umfasst, welche eine mit dem Gehäuse (2) verbundene Schutzgas-Zufuhrleitung (7) und einen mit dem Gehäuse (2) verbundenen Schutzgas-Abzug (8), insbesondere ein Überdruckventil, sowie einen Druckregler (9) und ein von einer im Gehäuse (2) angeordneten elektronischen Kontroll-Einheit (11) gesteuertes Drosselventil (12), aufweist, wobei die Schutzgas-Zufuhrleitung (7) an einer ersten Anschlussöffnung (13) des Gehäuses (2) befestigt ist und der Schutzgas-Abzug (8) an einer zweiten Anschlussöffnung (14) des Gehäuses befestigt ist.

12. Vorrichtung nach Anspruch 11, **dadurch gekennzeichnet, dass** die erste und zweite Anschlussöffnungen (13, 14) sowie eine im Innern des Gehäuses (2) vorgesehene Beleuchtungsvorrichtung (4), eine elektronische Schutzschaltung (5), mindestens eine elektro-optische oder spektroskopische Kamera (6), eine elektronische Kontroll-Einheit (11) und allfällige zusätzliche Stege, Rippen oder Leitbleche (nicht dargestellt) derart angeordnet sind, dass diese einen komplexen und vollständig durchströmbaren Hohlkörper (15), welcher mit dem Innenraum der Tubusspitze (3') kommuniziert, bilden, welcher einen zeitoptimierten (raschen) und vollständigen Schutzgas-Austausch mit hoher Konvektion und einer strömungsoptimierten Durchflussrate (laminarer Volumenstrom) aufweist.

13. Vorrichtung nach Anspruch 12, **dadurch gekennzeichnet, dass** die in den Reaktionsbehälter ragende Tubusspitze (3') Mittel zur Abschirmung derselben, insbesondere in Form eines anströmseitig angeordneten Abschirmbleches, umfasst.

14. Vorrichtung nach Anspruch 1, **dadurch gekennzeichnet, dass** die Tubusspitze (3') mit Mitteln zur Kühlung derselben, bspw. in Form eines wassergekühlten Kühlmantels, versehen ist.

15. Vorrichtung nach Anspruch 1 **dadurch gekennzeichnet, dass** das Datenerfassungs-, Datenanalyse- und Datenaufzeichnungssystem (19) mindestens ein Analyse-Modul umfasst, mit welchem für die Steuerung, Regelung und Optimierung der genannten Prozessabläufe erforderliche Kenngrössen bestimmbar und messbar sind, um die Vorrichtung als videobasierte Messeinheit zur prozessbegleitenden Echtzeit-Messung von für die Steuerung und Optimierung erforderlichen Kenngrössen zu verwenden.

16. Vorrichtung nach Anspruch 15, **dadurch gekennzeichnet, dass** das Analyse-Modul mehrere und/oder unterschiedliche elektro-optische und/oder spektroskopische Kameras aufweist, mit unterschiedlichen Aufnahme-Funktionen, wie Bildrate (frame-rate), monochrome oder polychrome Bildauflösung mit unterschiedlicher Helligkeits- und/oder Farbauflösung, und/oder mit unterschiedlichen optischen Eigenschaften, wie Fokus, Vergrösserung oder Lichtstärke und/oder mit unterschiedlicher Bildverarbeitungselektronik.

17. Vorrichtung nach Anspruch 16, **dadurch gekennzeichnet, dass** diese Kameras ferngesteuert einstellbar sind, bspw. deren Fokus und Zoom.

18. Verwendung einer Vorrichtung gemäss Anspruch 1 für die in-line oder in-situ Beobachtung, Überwachung, Steuerung und Regelung von chemischen und physikalischen Prozessabläufen im Innern von explosionsgeschützten Reaktionsbehältern in grosstechnischen Anlagen und während des Betriebs, d.h. ohne Unterbrechung des Produktions- und/oder Entwicklungs- und Forschungsprozesses.

## Claims

1. A device (1), in particular a process scope, for observing, monitoring, controlling and regulating chemical and physical process sequences inside explosion-proof reaction vessels in large-scale technical plants and during operation, i.e. without interrupting the production and/or development and research process,
which device (1) has an observation tube (3) with a tube tip (3'), an electro-optical or spectroscopic camera (6), a housing (2) with an electronic protection circuit (5) and an illumination device (4), as well as a power supply unit (17) and a data acquisition, data analysis and data recording system (19) with image processing electronics,
**characterized in that**
the device comprises zone-separated assemblies such that the observation tube and the tube tip (3') contain only passive components, are free of ignition sources and are suitable for use in an explosion-protected area, in particular in hazard zone 0/20 or 1/21 of an explosion-protected area,
wherein the housing (2) is suitable for use in an explosion-protected area, in particular in the highest hazard zone 1/21 and/or second-highest hazard zone 2/22 of an explosion-protected area,
wherein the power supply unit (17) and the data acquisition system as well as the data analysis and data recording system (19) are suitable for use in an explosion-protected area, in particular in hazard zone NH of an explosion-protected area,
wherein optical waveguides in rod form are provided both for the light transmission from the illumination device (4) to the tube tip (3') and for the image transmission from the tube tip (3') to the electro-optical or spectroscopic camera (6),
and a single-mode or multi-mode fiber optic data cable (18) is provided for the data transmission of the image data from the electro-optical or spectroscopic camera (6) to the data acquisition, data analysis and data recording system (19).

2. Device according to claim 1, **characterized in that** the tube tip (3') has an explosion-proof double barrier (51), which double barrier (51) comprises a distally arranged first sealing barrier (44) and a proximally arranged second sealing barrier (49), wherein at the first sealing barrier (44) between each of the fitting surfaces of the tube components (31 and 34, 32 and 34, 34) of the tube tip (3') lying precisely against each other there is at least one first seal (41, 42, 43) is provided and at least one second seal (45, 46, 47, 48) is provided in the second seal barrier (51) between each of the mating surfaces of the tube components (23 and 33, 33 and 21, 33 and 35, 35 and 36) of the tube tip (3') which lie precisely against one another,
wherein at least one first seal and at least one second seal of the double barrier (51) are designed to be pressure-tight for a process pressure of approximately 100 bar and have a process temperature resistance of at least 150 °C.

3. Device according to claim 2, **characterized in that** the tube tip (3')
a) has at least one observation front window (31) and at least one illumination front window (32), which front windows (31, 32) are arranged adjacent to one another, or
b) has a centrally arranged observation front window (31) and a preferably annular illumination front window (32) arranged concentrically thereto,
wherein
c) at least one observation front window (31) and/or at least one illumination front window (32) or a common illumination and observation front window (not shown) is designed in the form of a biplanar optical element or in the form of an asymmetrical truncated cone.

4. Device according to claim 3, **characterized in that** the at least one illumination front window (31) and the at least one observation front window (32) and/or the common illumination and observation front window are arranged frontally or laterally in the tube tip (3') and are made in particular of sapphire glass.

5. Device according to claim 4, **characterized in that** the illumination and/or observation front windows (31, 32) are provided with internal or external optical means, in particular a prism and/or a facet (53) and/or an aperture (54) and/or a lens (55), and are suitably aligned for use for distance measurement.

6. Device according to claim 5, **characterized in that** the front windows (31, 32, 32') arranged laterally in the tube tip (3') are secured with a retaining plate (56), in particular also in order to minimize the adhesion of particles from the particle stream.

7. Device according to claim 5, **characterized in that** the tube tip (3') around which the flow passes has an outer contour, in particular diamond-shaped, flow-optimized or with a horseshoe-shaped cross-section, which is suitable for reducing the adhesion of particles and the abrasion generated by the particle flow on the outside of the tube tip (3') projecting into the container.

8. Device according to claim 5, **characterized in that** the interior of the tube tip (3') is filled with a flowable material, in particular a free-flowing material.

9. Device according to claim 3, **characterized in that** at least one of the respective front windows (31, 32) of the tube tip (3') is provided with a cleaning unit (not shown), in particular with a unit with which a liquid or gaseous flow film can be generated intermittently or continuously over the outer surface of at least one of the respective front windows (31, 32).

10. Device according to claim 2, **characterized in that** the housing (2) is coupled to an "Ex p" flow-through device (7, 8, 9, 12, 15), in order to flood it with a protective gas, in particular air, and to provide it with an increased internal pressure of approximately 5 to 20 mbar, preferably of approximately 10 mbar.

11. Device according to claim 10, **characterized in that** the flow-through device (7, 8, 9, 12, 15) comprises a protective gas supply unit (not shown), which comprises a protective gas supply line (7) connected to the housing (2) and a protective gas outlet (8) connected to the housing (2), in particular a pressure relief valve, as well as a pressure regulator (9) and a throttle valve (12) controlled by an electronic control unit (11) arranged in the housing (2), wherein the protective gas supply line (7) is fastened to a first connection opening (13) of the housing (2) and the protective gas outlet (8) is fastened to a second connection opening (14) of the housing.

12. Device according to claim 11, **characterized in that** the first and second connection openings (13, 14) as well as an illumination device (4) provided inside the housing (2), an electronic protection circuit (5), at least one electro-optical or spectroscopic camera (6), an electronic control unit (11) and any additional ribs or baffles (not shown) are arranged in such a way that they form a complex and completely flow-through hollow body (15) which communicates with the interior of the tube tip (3'), which has a time-optimized (rapid) and complete protective gas exchange with high convection and a flow-optimized flow rate (laminar volume flow).

13. Device according to claim 12, **characterized in that** the tube tip (3') projecting into the reaction vessel comprises means for shielding the same, in particular in the form of a shielding plate arranged on the upstream side.

14. Device according to claim 1, **characterized in that** the tube tip (3') is provided with means for cooling the same, for example in the form of a water-cooled cooling jacket.

15. Device according to claim 1, **characterized in that** the data acquisition, data analysis and data recording system (19) comprises at least one analysis module with which parameters required for the control, regulation and optimization of the said process sequences can be determined and measured in order to use the device as a video-based measuring unit for the in-process real-time measurement of parameters required for the control and optimization.

16. Device according to claim 15, **characterized in that** the analysis module has several and/or different electro-optical and/or spectroscopic cameras, with different recording functions, such as frame rate, monochrome or polychrome image resolution with different brightness and/or colour resolution, and/or with different optical properties, such as focus, magnification or light intensity and/or with different image processing electronics.

17. Device according to claim 16, **characterized in that** these cameras are remotely adjustable, e.g. their focus and zoom.

18. Use of a device according to claim 1 for the in-line or in-situ observation, monitoring, control and regulation of chemical and physical process sequences inside explosion-proof reaction vessels in large-scale technical plants and during operation, i.e. without interrupting the production and/or development and research process.

## Revendications

1. Dispositif (1), en particulier un endoscope de procédé, adapté pour l'observation, la surveillance, le contrôle et la régulation de séquences de procédés chimiques et physiques à l'intérieur de réacteurs antidéflagrants dans des installations à grande échelle et pendant le fonctionnement, c'est-à-dire sans interruption du processus de production et/ou de développement et de recherche,
lequel dispositif (1) comprend un tube d'observation (3) avec une extrémité de tube (3'), une caméra électro-optique ou spectroscopique (6), un boîtier (2) avec un circuit électronique de protection (5) et un dispositif d'éclairage (4), ainsi qu'une unité d'alimentation (17) et un système d'acquisition, d'analyse et d'enregistrement de données (19) avec électronique de traitement d'images,
**caractérisé en ce que**
le dispositif comprend des ensembles séparés par zones, de telle sorte que le tube d'observation et l'extrémité de tube (3') ne contiennent que des composants passifs, sont exempts de sources d'inflammation et sont adaptés à une utilisation dans une zone antidéflagrante, en particulier dans la zone dangereuse 0/20 ou 1/21 d'une zone antidéflagrante,
le boîtier (2) étant adapté à l'utilisation dans une zone antidéflagrante, en particulier dans la zone dangereuse de niveau la plus élevée 1/21 et/ou de deuxième niveau la plus élevée 2/22 d'une zone antidéflagrante,
l'unité d'alimentation (17) et le système d'acquisition, d'analyse et d'enregistrement de données (19) étant adaptés à une utilisation en zone antidéflagrante, en particulier dans la zone dangereuse NH d'une zone antidéflagrante,
des guides d'ondes optiques en forme de tiges étant prévus à la fois pour la transmission lumineuse depuis le dispositif d'éclairage (4) jusqu'à l'extrémité de tube (3') et pour la transmission d'images de l'extrémité de tube (3') vers la caméra électro-optique ou spectroscopique (6),
et un câble à fibres optiques monomode ou multimode (18) étant prévu pour la transmission des données d'image de la caméra électro-optique ou spectroscopique (6) vers le système d'acquisition, d'analyse et d'enregistrement de données (19).

2. Dispositif selon la revendication 1, **caractérisé en ce que** l'extrémité de tube (3') présente une double barrière antidéflagrante (51), laquelle double barrière (51) comprend une première barrière d'étanchéité (44) disposée de manière distale et une deuxième barrière d'étanchéité (49) disposée de manière proximale, dans laquelle au niveau de la première barrière d'étanchéité (44) au moins un premier joint d'étanchéité (41, 42, 43) est prévue entre chacune des surfaces d'ajustage des composants du tube (31 et. 34, 32 et 34, 34 et 36) de l'extrémité de tube (3') qui s'ajustent précisément les uns aux autres, et dans lequel, au niveau de la deuxième barrière d'étanchéité (51), au moins un deuxième joint d'étanchéité (45, 46, 47, 48) est prévu entre chacune des surfaces de couplage des composants du tube (23 et 33, 33 et 21, 33 et 35, 35 et 36) de l'extrémité de tube (3') qui se s'ajustent précisément les uns contre les autres,
au moins un premier joint et au moins un deuxième joint de la double barrière (51) étant conçus de manière à être étanches sous une pression à la pression pour une pression de procédé d'environ 100 bars et résistant à la température de procédé d'au moins 150 °C.

3. Dispositif selon la revendication 2, **caractérisé en ce que** l'extrémité de tube (3')
a) comprend au moins une fenêtre frontale d'observation (31) et au moins une fenêtre frontale d'éclairage (32), lesquelles fenêtres frontales (31, 32) sont disposées de manière adjacente l'une à l'autre, ou
b) comprend une fenêtre frontale d'observation (31) disposée de manière central et une fenêtre frontale d'éclairage (32), de préférence en forme annulaire, disposée concentriquement à celle-ci,
dans lequel
c) au moins une fenêtre frontale d'observation (31) et/ou au moins une fenêtre frontale d'éclairage (32) ou une fenêtre frontale commune d'éclairage et d'observation (non représentée) est réalisée sous la forme d'un élément optique biplan ou sous la forme d'un cône tronqué asymétrique.

4. Dispositif selon la revendication 3, **caractérisé en ce que** l'au moins une fenêtre frontale d'éclairage (31) et l'au moins une fenêtre frontale d'observation (32) et/ou la fenêtre frontale commune d'éclairage et d'observation sont disposées frontalement ou latéralement dans l'extrémité de tube (3') et sont fabriquées en particulier en verre saphir.

5. Dispositif selon la revendication 4, **caractérisé en ce que** les fenêtres frontales d'éclairage et/ou d'observation (31, 32) sont pourvues de moyens optiques internes ou externes, en particulier d'un prisme et/ou d'une facette (53) et/ou d'un diaphragme (54) et/ou d'une lentille (55), et sont alignées de manière appropriée pour une utilisation en mesure de distance.

6. Dispositif selon la revendication 5, **caractérisé en ce que** les fenêtres frontales (31, 32, 32') disposées latéralement dans l'extrémité de tube (3') sont sécurisées par une plaque de retenue (56), notamment pour minimiser l'adhérence de particules provenant du flux de particules.

7. Dispositif selon la revendication 5, **caractérisé en ce que** l'extrémité de tube (3'), contournée par l'écoulement, présente un contour extérieur, en particulier en forme de diamant, optimisé pour l'écoulement ou avec une section transversale en forme de fer à cheval, adapté à réduire l'adhérence des particules et l'abrasion générée par l'écoulement de particules sur la face externe de l'extrémité de tube (3') s'étendant dans le récipient.

8. Dispositif selon la revendication 5, **caractérisé en ce que** l'intérieur de l'extrémité de tube (3') est rempli d'un matériau fluide, en particulier d'un matériau à écoulement libre.

9. Dispositif selon la revendication 3, **caractérisé en ce qu'**au moins l'une des fenêtres frontales (31, 32) de l'extrémité de tube (3') est pourvue d'une unité de nettoyage (non représentée), en particulier d'une unité permettant de générer, de manière intermittente ou continue, un film d'écoulement liquide ou gazeux sur la surface externe d'au moins une desdits fenêtres frontales (31, 32).

10. Dispositif selon la revendication 2, **caractérisé en ce que** le boîtier (2) est couplé à un dispositif de balayage "Ex p" (7, 8, 9, 12, 15), destiné à l'inonder avec un gaz protecteur, notamment de l'air, et à lui conférer d'une surpression interne de l'ordre de 5 à 20 mbar, de préférence d'environ 10 mbar.

11. Dispositif selon la revendication 10, **caractérisé en ce que** le dispositif de balayage (7, 8, 9, 12, 15) comprend une unité d'alimentation en gaz de protection (non représentée), qui comprend une conduite d'alimentation en gaz de protection (7) reliée au boîtier (2) et un sortie de gaz de protection (8) relié au boîtier (2), en particulier une soupape de décharge, ainsi qu'un régulateur de pression (9) et un clapet de réglage (12) commandée par une unité de contrôle électronique (11) disposée dans le boîtier (2), la conduite d'alimentation en gaz de protection (7) étant fixée à une première ouverture de raccordement (13) du boîtier (2) et la sortie de gaz de protection (8) étant fixé à une deuxième ouverture de raccordement (14) du boîtier.

12. Dispositif selon la revendication 11, **caractérisé en ce que** les première et deuxième ouvertures de raccordement (13, 14) ainsi que le dispositif d'éclairage (4) disposé à l'intérieur du boîtier (2), le circuit électronique de protection (5), au moins une caméra électro-optique ou spectroscopique (6), l'unité de contrôle électronique (11) et d'éventuelles nervures ou chicane supplémentaires (non représentées) sont disposés dans le boîtier (2), sont disposées de manière à former un corps creux complexe à passage intégrale (15), communiquant avec l'intérieur de l'extrémité de tube (3'), lequel permet un échange de gaz de protection complet et optimisé en temps (rapide) avec une forte convection et un débit optimisé en termes de flux (flux volumique laminaire).

13. Dispositif selon la revendication 12, **caractérisé en ce que** l'extrémité de tube (3') s'étendant dans le réacteur comprend des moyens de protection, en particulier sous la forme d'une plaque de protection disposée du côté amont.

14. Dispositif selon la revendication 1, **caractérisé en ce que** l'extrémité de tube (3') est pourvue de moyens de refroidissement, par exemple sous la forme d'une enveloppe de refroidissement à eau.

15. Dispositif selon la revendication 1, **caractérisé en ce que** le système d'acquisition, d'analyse et d'enregistrement de données (19) comprend au moins un module d'analyse permettant de déterminer et de mesurer des paramètres requis pour la commande, la régulation et l'optimisation desdits séquences de procédé, afin d'utiliser le dispositif comme unité de mesure vidéo pour la mesure en temps réel, en cours de procédé, des paramètres requis pour la commande et l'optimisation.

16. Dispositif selon la revendication 15, **caractérisé en ce que** le module d'analyse présente plusieurs et/ou différentes caméras électro-optiques et/ou spectroscopiques, ayant différentes fonctions d'enregistrement, telles que la fréquence d'images, la résolution d'image monochrome ou polychrome avec différentes résolutions de luminosité et/ou de couleur, et/ou avec différentes propriétés optiques, telle que la mise au point, le grossissement ou l'intensité lumineuse et/ou avec différentes électroniques de traitement d'image.

17. Dispositif selon la revendication 16, **caractérisé en ce que** ces caméras sont réglables à distance, par exemple leur focalisation et leur zoom.

18. Utilisation d'un dispositif selon la revendication 1 pour l'observation, la surveillance, la commande et la régulation en ligne ou in-situ de séquence de procédés chimiques et physiques à l'intérieur de réacteur antidéflagrantes dans des installations techniques de grande échelle et en cours de fonctionnement, c'est-à-dire sans interruption du processus de production et/ou de développement et de recherche.
